# EUROPEAN PATENT SPECIFICATION

(11) **EP 3 653 273 B1**
(45) Date of publication and mention of the grant of the patent: **08.12.2021**
(21) Application number: 19205929.3
(22) Date of filing: 29.10.2019
(51) Int. Cl.: A63B 63/00, F16B 12/40, E04B 1/58, F16B 2/22, F16B 5/06, F16B 7/04, F16B 7/18

(54) **MODULAR CROSSBAR**
MODULARER QUERBALKEN
BARRE TRANSVERSALE MODULAIRE

(30) Priority: 31.10.2018 GB 201817829
(43) Date of publication of application: 20.05.2020
(73) Proprietor: Net World Sports Limited, Wrexham, Clwyd LL13 9UT (GB)
(72) Inventor: Lovén, Alex, Wrexham, North Wales LL13 9UT (GB)
(74) Representative: Wynne-Jones IP Limited

(56) References cited:
- EP-A1- 3 053 631
- JP-A- 2010 227 192
- US-A1- 2007 145 688

## Description

The present invention relates to crossbars for sports goals and like assemblies, and more particularly, to modular crossbars for portable or semi-permanent football goals.

It is important to allow sports goals to be easily accessible around the world without compromising on their safety and durability. Goals are used for many different sports including but not limited to football, handball and futsal.

On existing, conventional models the logistical and conceptual design of a crossbar is inefficient due to the size, weight and manufacturing processes put into place. As a result, the restriction placed upon the size and weight of the crossbar further enhances the restricted access for the end consumer due to increased logistical outlay and assembly time.

The traditional crossbar design is uninspired, bulky and not fit for the modern era whereby increased consumer demand requires faster delivery times allowing soccer goals to be introduced into the mass market bringing an enhanced user-friendly design. Lifting and lowering of the crossbar needs to be done in a safe manner and involve the minimum number of operators possible. All these need to be overcome whilst still meeting strict safety standards.

US2007/145688 discloses a connector and goal frame member comprising an elongate goal frame member with a hollow open end and a connector slidably received with the hollow end, and a fastener extending through a recessed channel of the goal frame member and an inset track of the connector.

EP3053631 discloses an aluminium profile joining corner element for a goal frame, the corner element comprising a corner housing surrounding a corner tube. JP2010227192 discloses a goal frame comprising a plurality of rod-shaped members having a hollow tubular shape, and a hollow tubular connecting member which is inserted into the inner space of each of the rod-shaped members.

To overcome issues with the prior art, the present invention proposes an aluminium crossbar on a modular mechanism that is easy to assemble using brackets and internal connectors, this is done in a manner which does not have any fittings or fixings protruding from the face of the goal whilst also allowing net clips to still be fitted into the fixing channel. The crossbar, which can be fitted to numerous sizes of sports goals, enables the efficient construction of the goal whilst deploying a safe, sturdy and non-corrosive crossbar. The crossbar is also locked into place with specifically designed hardware to enable a singular person to assemble the goal whilst reducing the minimum number of operators required for lifting and carrying.

In accordance with the present invention there is provided a frame assembly for a sports goal comprising:
at least two frame members each comprising an internal channel defined by a respective frame member casing and each comprising an external channel formed upon the casing;
   wherein each frame member casing comprises a plurality of apertures extending between the internal channel and external channel channel;
an insert disposed within the internal channel of each of the at least two frame members in use, the insert having a plurality of insert apertures, each of the plurality of insert apertures being aligned in use with a corresponding aperture of the frame member casings; and
a plurality of first fixing members, each first fixing member being configured to extend in use through one of the plurality of apertures of the frame member casings and the corresponding insert aperture with which the aperture of the frame member casing is aligned when the insert apertures and the apertures of the frame member casings are aligned in use, the plurality of first fixing members extending between the internal channel and the external channel of the frame members is use and thereby connecting the at least two frame members and the insert;
characterised by a plurality of second fixing members, each of which is disposed in use within one of the external channels of the at least two the frame members to protrude outwardly from said external channel in use; and
a plate, disposed within the external channel of each of the at least two frame members in use, the plate having a plurality of first plate apertures, each aperture being aligned in use with a corresponding one of the second fixing members which extends in use through the first plate aperture with which it is aligned, thereby connecting the plate to the frame members, the plate having the plate having a plurality of second plate apertures configured to receive a connection means for connecting a goal net to the frame assembly.

The invention differs from the prior art, in particular US2007/145688, in its characterising features.

Further aspects and embodiments of the invention are provided as set out in the claims.

The invention may be performed in various ways and embodiments thereof will now be described, by way of example only, reference being made to the accompanying drawings, in which:
Figure 1 is a diagram showing an exemplary sports goal using the frame assembly according to an embodiment of the invention;
Figure 2 is a diagram showing an unassembled view of components of the frame assembly according to an embodiment of the invention;
Figure 3 is a diagram showing a partially assembled view of components of the frame assembly according to an embodiment of the invention; and,
Figure 4 is a diagram showing an assembled view of components of the frame assembly according to an embodiment of the invention.

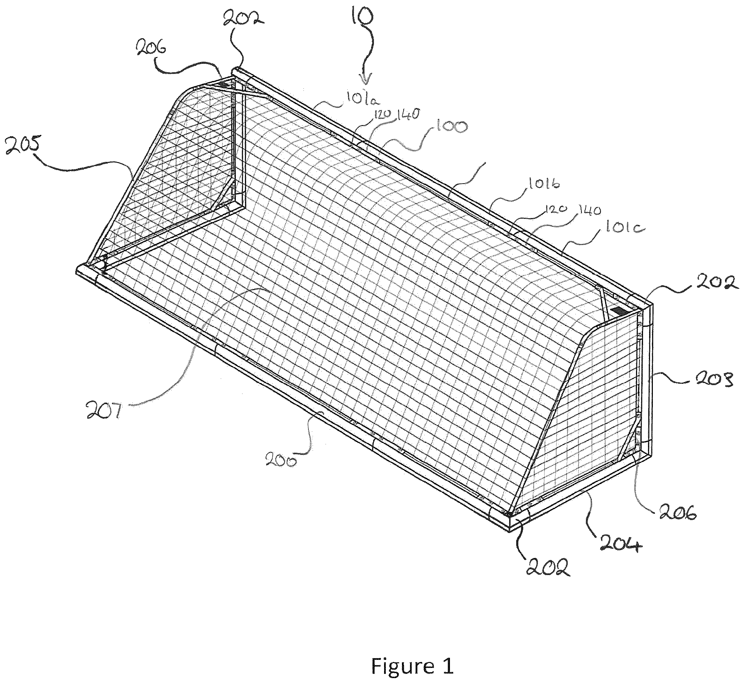

Referring to Figure 1 of the drawings, there is illustrated a sports goal 10 for use in football (soccer) comprising a frame assembly 100 according to an embodiment of the present invention. The frame assembly 100 comprises three frame members 101a,101b,101c, defining an upper crossbar for the goal. The three frame members are connected externally via plates 140, situated in an external channel 104 formed on the rear in use of the casing of the frame members. The plates are attached to the frame member with fixing members 120. The three frame members are connected via joints 202 to the upright posts 203, which in turn are connected to side posts 204. A second base crossbar 200 potentially identical to the upper crossbar 100 is placed to the rear between the side posts 204. A back or net support 205 is connected between the joints of the upper and base crossbars. Additionally bracers 206 are placed at the corner to further support the net 207 and the goal frame 10.

In an embodiment the frame members are tubular. The frame members may be partly, substantially hollow. The frame members may adhere to standard or conventional shapes and sizes of sports goals components, such that they may be retrofitted to existing goals or form new modular assemblies where more than one is used. The frame member may be constructed from any appropriate material such as aluminium or plastics.

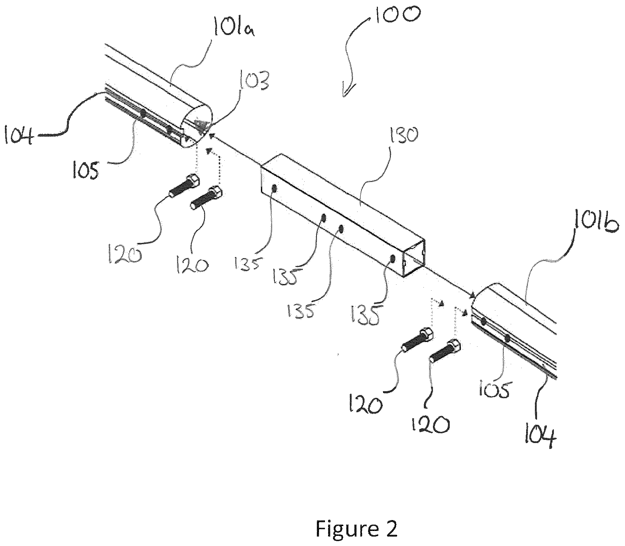

Referring to Figure 2 of the drawings, there is illustrated a portion of a frame assembly 100, prior to it being assembled for use. Two frame members 101a, 101b are shown in a separated configuration. An insert 130 is shown between the two frame members. The insert 130 is positionable within the internal channel 103 of the frame members. The insert 130 has apertures 135 which align with apertures 105 on the casing of the frame member extending between the external channel 104 and the internal channel 103. When the two frame members 101 are connected such that they are abutting, the insert 130 will not be visible. Further shown are fixing members 120 which slot into the external channel 103, which will be used for attaching further components to the assembly.

In an embodiment the insert is weighted to weigh down the goal to prevent any injury from tipping. The insert may be aligned within the frame members with the help of locating features within the internal channel; such features may be protrusions which impede further progress along the length of the member or the like. In conjunction with the frame members the insert may be constructed from various materials in the appropriate size and shape for the required use.

In an embodiment the external channel is as known in the art, profiled such that the channel may be used with "quick clips" to attach nets to goals. Further embodiments are envisaged where the channel also cooperates with second fixing members 120 to retain them in place, the channel may be further supplied with locating features such as protrusions or indentations that the fixing member cooperate with. In Figure 2 the fixing member is a threaded bolt, where the bolt locates in the channel. It will be appreciated that the skilled person could envisage multiple various method of attachment that are simple and well know. For example the insert aperture 135 may include a threaded circumference or other method to retain the first fixing means 110.

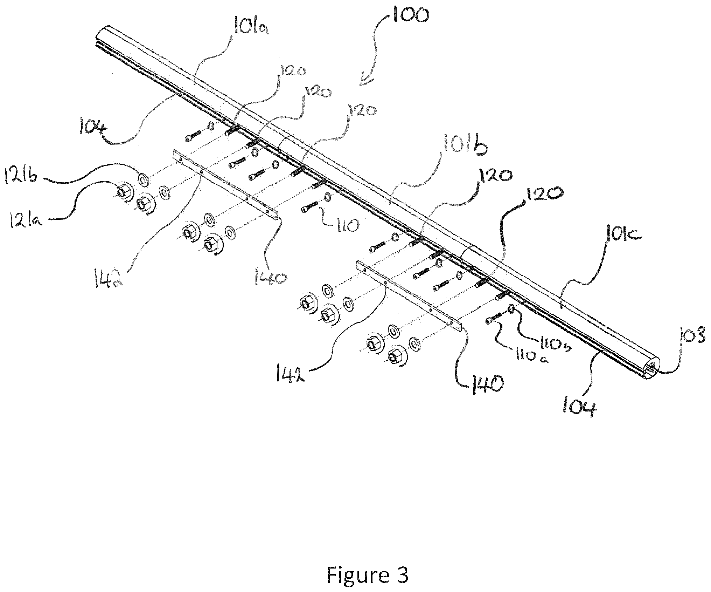

Referring to Figure 3 of the drawings, there is illustrated a frame assembly 100, in a partially configured arrangement. Three frame members 101a,101b,101c are shown in a joined configuration. A plurality of first fixing members 110 are shown extending through the plurality of apertures 105 on the frame member casings and into the insert, which is not visible being within the internal channel, thereby connecting the frame members and insert. A plurality of second fixing members 120 is disposed within the external channel 104 of the frame members is visible. A plate 140 is shown which is disposable within the external channel 104. The plate has a plurality of first plate apertures 142 alignable with the plurality of second fixing members 120 in use. It can be seen that the plate 140 enters into the channel 104 and the plurality of second fixing members 120 extend through the first plate apertures 142. When the plate is in the channel and engaged with the second fixing members the connection between the frame members is further secured. The first fixing means or members 110 as shown comprises a threaded bolt 110a and a washer 110b, the washer being placed between the bolt and the surface of the external channel 104. The second fixing means or members 120 as shown comprises a threaded bolt 120, a nut 121a and washer 121b, in use the bolt 120 protrudes through aperture 142 of the plate 140; the washer 121b is between the plate and nut 121a.

In an embodiment both the first and second fixing means are shown as threaded bolts, included nuts (for the second means) and washers. It will be appreciated that the skilled person could consider various other attachment means for example but not limited to clips, brackets, screws, adhesives, resiliently deformable members, straps etc.

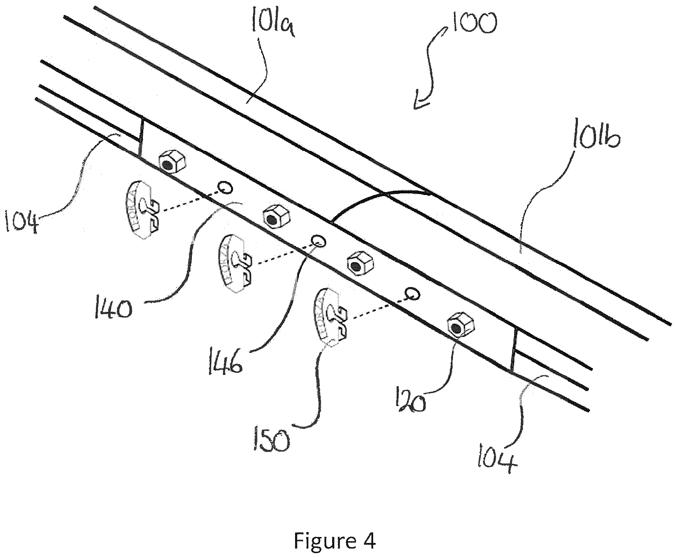

Referring to Figure 4 of the drawings, there is illustrated a frame assembly 100, in an assembly arrangement. Two frame members 101a,101b are shown in a joined configuration, by the plate 140 located in the external channel 104, secured to both the frame members by fixing means 120. Further shown is the plate 140 has a second plurality of apertures 146 configured to receive a connection means 150 for supporting a goal net 207.

In an example of use of the frame assembly 100, the components can be brought to the location of the goal in a deconstructed configuration. Two frame members 101a and 101b may be set out with an insert 130. The insert 130 is placed partially within both the internal channels 103 of the frame members, there may be locating feature within the channel to help with alignment. Second fixing members 120 are slid into the external channel 104, which may also have locating features to help with alignment. The frame members are brought together and the insert 130 enclosed. The second fixing members protrude outwards from the external channel. First fixing members 110 are placed through apertures 105 in the external channel 104 into the internal channel 103 and also the insert 130, thereby retaining the insert within the frame members and also securing the opposing frame members 101a,101b. A plate 140 is placed over the protruding second fixing members 120, which extend through the plates first apertures 142. Additional features of the fixing members 120 such as washers 121b and nuts 121a can then be used to secure the plate in place and further securing the frame members, such that they are adequately robust for use. Finally further connecting means 150 can be placed through the plate's 140 second plate apertures 146, which can be used to attach the net 207 to the goal. Once the frame assembly is completed it can be attached to further interconnectable modular frame assemblies or standard components to form the full structure of a goal 10. Multiple frame assemblies can be used to create multiple goals at different location with ease.

It will be appreciated that some of these steps can be done in different orders, for example sliding in the second fixing members from the end of the channel furthest from where the members connect, but this will add time to the set up.

It will be appreciated that frame assembly of the present invention provides a modular, safe and portable goal for use in all weather conditions, conforming to all the required safety standards and meeting different sporting regulations.

## Claims

1. A frame assembly (100) for a sports goal comprising:
at least two frame members (101) each comprising an internal channel (103) defined by a respective frame member casing and each comprising an external channel (104) formed upon the casing;
wherein each frame member casing comprises a plurality of apertures (105) extending between the internal channel (103) and external channel (104);
an insert (130) disposed within the internal channel (103) of each of the at least two frame members in use, the insert having a plurality of insert apertures (135);
each of the plurality of insert apertures (135) being aligned in use with a corresponding aperture (105) of the frame member casings; and
a plurality of first fixing members (110), each first fixing member being configured to extend in use through one of the plurality of apertures (105) of the frame member casings and the corresponding insert aperture (135) with which the aperture (105) of the frame member casing is aligned when the insert apertures (135) and the apertures (105) of the frame member casings are aligned in use, the plurality of first fixing members extending between the internal channel (103) and the external channel (104) of the frame members in use and thereby connecting the at least two frame members and the insert;
**characterised by**:
a plurality of second fixing members (120), each of which is disposed in use within one of the external channels (104) of the at least two frame members to protrude outwardly from said external channel in use; and
a plate (140), disposed within the external channel of each of the at least two frame members (104) in use, the plate having a plurality of first plate apertures (142), each aperture (142) being aligned in use with a corresponding one of the second fixing members (120) which extends in use through the first plate aperture (140) with which it is aligned thereby connecting the plate (140) to the frame members, the plate having a plurality of second plate apertures (146), each second plate aperture being configured to receive a connection means for connecting a goal net to the frame assembly.

2. A frame assembly as claimed in claim 1, wherein the frame members (101) are substantially tubular in shape.

3. A frame assembly as claimed in any previous claim, comprising three frame members and two inserts.

4. A frame assembly as claimed in any previous claim, wherein the insert (130) comprise an internal thread formed within the apertures (135) which is engagable with the plurality of first fixing members (110).

5. A frame assembly as claimed in any previous claim, wherein the plurality of second fixing members (120) each comprise a bolt, washer (121b) and nut (121a).

6. A frame assembly as claimed in any previous claim, further comprising joint members (202) to connect the frame members (101) to further frame components (203).

7. A sports goal comprising a frame assembly as claimed in any previous claim.

8. A sports goal as claimed in claim 7 wherein the sports goal is for football, footsal or handball.

## Patentansprüche

1. Rahmenanordnung (100) für ein Sporttor, das Folgendes umfasst:
wenigstens zwei Rahmenelemente (101), wobei jedes einen inneren Kanal (103) umfasst, der durch ein jeweiliges Rahmenelementgehäuse definiert ist, und jedes einen äußeren Kanal (104) umfasst, der auf dem Gehäuse ausgebildet ist;
wobei jedes Rahmenelementgehäuse mehrere Öffnungen (105) umfasst, die sich zwischen dem inneren Kanal (103) und dem äußeren Kanal (104) erstrecken;
einen Einsatz (130), der innerhalb des inneren Kanals (103) jedes der wenigstens zwei Rahmenelemente in Verwendung eingerichtet ist, wobei der Einsatz mehrere Einsatzöffnungen (135) aufweist;
wobei jede der mehreren Einsatzöffnungen (135) in Verwendung mit einer entsprechenden Öffnung (105) der Rahmenelementgehäuse ausgerichtet ist; und
mehrere erste Befestigungselemente (110), wobei jedes erste Befestigungselement konfiguriert ist, um sich in Verwendung durch eine der mehreren Öffnungen (105) der Rahmenelementgehäuse und die entsprechende Einsatzöffnung (135) zu erstrecken, mit der die Öffnung (105) des Rahmenelementgehäuses ausgerichtet ist, wenn die Einsatzöffnungen (135) und die Öffnungen (105) der Rahmenelementgehäuse in Verwendung ausgerichtet sind, wobei sich die mehreren ersten Befestigungselemente zwischen dem inneren Kanal (103) und dem äußeren Kanal (104) der Rahmenelemente in Verwendung erstrecken und wobei dadurch die wenigstens zwei Rahmenelemente und der Einsatz verbunden sind;
**gekennzeichnet durch**:
mehrere zweite Befestigungselemente (120), die jeweils in Verwendung innerhalb eines der äußeren Kanäle (104) der wenigstens zwei Rahmenelemente eingerichtet sind, um von dem äußeren Kanal in Verwendung nach außen vorzustehen; und
eine Platte (140), die innerhalb des äußeren Kanals von jedem der wenigstens zwei Rahmenelemente (104) in Verwendung eingerichtet ist, wobei die Platte mehrere erste Plattenöffnungen (142) aufweist, wobei jede Öffnung (142) in Verwendung mit einem entsprechenden der zweiten Befestigungselemente (120) ausgerichtet ist, das sich in Verwendung durch die erste Plattenöffnung (140) erstreckt, mit der es ausgerichtet ist, wobei dadurch die Platte (140) mit den Rahmenelementen verbunden wird, wobei die Platte mehrere zweite Plattenöffnungen (146) aufweist, wobei jede zweite Plattenöffnung konfiguriert ist, um ein Verbindungsmittel zum Verbinden eines Tornetzes mit der Rahmenanordnung aufzunehmen.

2. Rahmenanordnung nach Anspruch 1, wobei die Rahmenelemente (101) im Wesentlichen rohrförmig sind.

3. Rahmenanordnung nach einem der vorhergehenden Ansprüche, die drei Rahmenelemente und zwei Einsätze umfasst.

4. Rahmenanordnung nach einem der vorhergehenden Ansprüche, wobei der Einsatz (130) ein Innengewinde umfasst, das innerhalb der Öffnungen (135) ausgebildet ist, das mit den mehreren ersten Befestigungselementen (110) in Eingriff gebracht werden kann.

5. Rahmenanordnung nach einem der vorhergehenden Ansprüche, wobei die mehreren zweiten Befestigungselemente (120) jeweils eine Schraube, eine Unterlegscheibe (121b) und eine Mutter (121a) umfassen.

6. Rahmenanordnung nach einem der vorhergehenden Ansprüche, die ferner Gelenkelemente (202) umfasst, um die Rahmenelemente (101) mit weiteren Rahmenkomponenten (203) zu verbinden.

7. Sporttor, das eine Rahmenanordnung nach einem der vorhergehenden Ansprüche umfasst.

8. Sporttor nach Anspruch 7, wobei das Sporttor für Fußball, Futsal oder Handball vorgesehen ist.

## Revendications

1. Ensemble châssis (100) pour une cage de sport comprenant :
au moins deux éléments de châssis (101) comprenant chacun un canal interne (103) défini par un boîtier d'élément de châssis respectif et comprenant chacun un canal externe (104) formé sur le boîtier ;
dans lequel chaque boîtier d'élément de châssis comprend une pluralité d'ouvertures (105) s'étendant entre le canal interne (103) et le canal externe (104) ;
un insert (130) disposé à l'intérieur du canal interne (103) de chacun des au moins deux éléments de châssis en cours d'utilisation, l'insert ayant une pluralité d'ouvertures d'insert (135) ;
chacune de la pluralité d'ouvertures d'insertion (135) étant alignée en cours d'utilisation sur une ouverture correspondante (105) des boîtiers d'éléments de châssis ; et
une pluralité de premiers éléments de fixation (110), chaque premier élément de fixation étant conçu pour s'étendre en cours d'utilisation à travers l'une de la pluralité d'ouvertures (105) des boîtiers d'éléments de châssis et l'ouverture d'insertion correspondante (135) avec laquelle l'ouverture (105) du boîtier d'élément de châssis est aligné lorsque les ouvertures d'insertion (135) et les ouvertures (105) des boîtiers d'élément de châssis sont alignées en cours d'utilisation, la pluralité de premiers éléments de fixation s'étendant entre le canal interne (103) et le canal externe (104) des éléments de châssis en cours d'utilisation et reliant ainsi les au moins deux éléments de châssis et l'insert ;
**caractérisé par** :
une pluralité de seconds éléments de fixation (120), dont chacun est disposé en cours d'utilisation dans l'un des canaux externes (104) des au moins deux éléments de châssis pour faire saillie vers l'extérieur dudit canal externe en cours d'utilisation ; et
une plaque (140), disposée à l'intérieur du canal externe de chacun des au moins deux éléments de châssis (104) en cours d'utilisation, la plaque ayant une pluralité de premières ouvertures de plaque (142), chaque ouverture (142) étant alignée en cours d'utilisation sur un correspondant des seconds éléments de fixation (120) qui s'étend en cours d'utilisation à travers la première ouverture de plaque (140) sur laquelle il est aligné reliant ainsi la plaque (140) aux éléments de châssis, la plaque ayant une pluralité d'ouvertures de seconde plaque (146), chaque seconde ouverture de plaque étant conçue pour recevoir un moyen de liaison pour relier un filet de cage à l'ensemble châssis.

2. Ensemble châssis selon la revendication 1, dans lequel les éléments de châssis (101) ont une forme sensiblement tubulaire.

3. Ensemble châssis selon l'une quelconque des revendications précédentes, comprenant trois éléments de châssis et deux inserts.

4. Ensemble châssis selon l'une quelconque des revendications précédentes, dans lequel l'insert (130) comprend un filetage interne formé à l'intérieur des ouvertures (135) qui peut entrer en prise avec la pluralité de premiers éléments de fixation (110).

5. Ensemble châssis selon l'une quelconque des revendications précédentes, la pluralité de seconds éléments de fixation (120) comprenant chacun un boulon, une rondelle (121b) et un écrou (121a).

6. Ensemble châssis selon l'une quelconque des revendications précédentes, comprenant en outre des éléments de joint (202) pour relier les éléments de châssis (101) à d'autres composants de châssis (203).

7. Cage de sport comprenant un ensemble châssis selon l'une quelconque des revendications précédentes.

8. Cage de sport selon la revendication 7, dans lequel la cage de sport est pour le football, le football en salle ou le handball.
